# EUROPÄISCHE PATENTSCHRIFT

(11) **EP 1 001 293 B1**
(45) Veröffentlichungstag und Bekanntmachung des Hinweises auf die Patenterteilung: **09.08.2006**
(21) Anmeldenummer: 99122328.0
(22) Anmeldetag: 09.11.1999
(51) Int. Cl.: G02B 6/44

(54) **Lichtwellenleiter-Anschlussdose**
Lightguide connection box
Boîte de raccordement à guide d'onde

(30) Priorität: 09.11.1998 DE 19851602
(43) Veröffentlichungstag der Anmeldung: 17.05.2000
(73) Patentinhaber: DÄTWYLER AG KABEL + SYSTEME, CH-6460 Altdorf (CH)
(72) Erfinder: Klees, Ernst, 80939 München (DE)
(74) Vertreter: Lippich, Wolfgang

(56) Entgegenhaltungen:
- EP-A- 0 463 749
- GB-A- 2 191 598
- US-A- 4 730 893
- US-A- 4 859 020
- US-A- 5 645 449
- US-A- 5 659 655

## Beschreibung

Die Erfindung betrifft eine Lichtwellenleiter-Anschlußdose zur Verbindung eines Lichtwellenleiter-Anschlußkabels mit einem Lichtwellenleiter-Streckenkabel.

Aus der DE 41 20 038 C2 sind Steckkupplungen zum Aufbau sehr langer, nicht dauerhaft verlegter Lichtwellenleiter-Leitungen bekannt. Hierbei werden mehrere lange Leitungsstücke mit Hilfe der Steckkupplungen zu einer durchgehenden Leitung gekoppelt. Um im Fall einer Beschädigung einer Steckkupplung nicht das gesamte betroffene Leitungsstück austauschen zu müssen, sind die Steckkupplungen mit besonderen Einsatz- oder Zwischenstücken ausgerüstet, die austauschbar sind.

Aus der US 5 659 655, nach welcher der Oberbegriff des Anspruchs 1 formuliert wurde, sind Lichtwellenleiterdosen bekannt, die an strategisch wichtigen Stellen entlang des Lichtwellenleiterhauptbandkabels in einem Flugzeug positioniert sind. Die Lichtwellenleiterdosen erlauben das Ver- und Abzweigen des Hauptbandkabels.Lichtwellenleiter (abgekürzt LWL) kommen in zunehmendem Maße bei fest verlegten Datennetzverkabelungen in und zwischen Gebäuden zur Anwendung. Dabei verlaufen die LWL-Kabel zur Arbeitsplatzerschließung in den einzelnen Räumen eines Gebäudes (sog. Tertiärverkabelung) zumeist in sog. Brüstungskanälen. Diese fest verlegten Kabel werden im folgenden auch "Streckenkabel" genannt. Einen Überblick über die Gebäudeverkabelung mit Lichtwellenleitern gibt das Buch "unilan® - Handbuch der universellen Gebäudeverkabelung", Dätwyler, 1998, S. 63-130.

Zum Anschluß von Geräten (z.B. Computern) mit beweglichen LWL-Kabeln (sog. Anschlußkabeln) an die Streckenkabel dienen i.a. LWL-Steckdosen. Eine derartige bekannte Dose wird beispielsweise von der Firma Dätwyler Kabel + Systeme GmbH unter dem geschützten Namen "optopatch" vertrieben. Diese Dose besteht im wesentlichen aus einem Dosenunterteil, einem Deckel und einer oder mehrerer LWL-Steckkupplungen. Das Dosenunterteil ist zum Einsatz in einen Gerätebecher eines Brüstungskanals vorgesehen. Da sich die Abmessungen der Brüstungskanäle von Hersteller zu Hersteller unterscheiden, muß praktisch für jeden Brüstungskanaltyp eine speziell angepaßte Steckdose vorgesehen werden.

Die Installation dieser Steckdose geschieht folgendermaßen: Zunächst ist das Streckenkabel in den Gerätebecher einzuführen und gegen Zug zu entlasten. Die Überlänge der LWL-Fasern wird im Gerätebecher aufgerollt. Laut Vorgaben der LWL-Faserhersteller soll dabei bei den üblicherweise verwendeten Fasertypen ein Biegeradius von 30 mm nicht unterschritten werden. Nach Befestigen des Dosenunterteils im Gerätebecher werden die LWL-Fasern in erforderlicher Länge in die Dose eingeführt. Das Streckenkabel wird dann fest an der oder den Steckkupplungen montiert, wobei zur Gewährleistung der erforderlichen optischen Kopplung mit der entsprechenden LWL-Ader des Anschlußkabels eine glatte rechtwinklige Endfläche hergestellt wird, z. B. durch Schleifen oder mit Hilfe des Biege-Ritz-Prinzips.

Auch wenn sich diese Technik bewährt hat und inzwischen allgemein zur Anwendung gelangt, kann sie noch nicht als optimal angesehen werden. Die Gefahr einer Verletzung der Glasfasern ist bei den vielen, im Laufe des Betriebs durchgeführten Steckvorgängen relativ groß. Im Fall einer solchen Verletzung kann die Fehlerbeseitigung i.a. nur durch eine Fachfirma erfolgen. Dies ist oft mit hohen Kosten verbunden; zudem sind solche Fachfirmen in der Praxis auch in ihrer Verfügbarkeit oft beschränkt.

Der Erfindung liegt die Aufgabe zugrunde, eine Einrichtung zur Verbindung eines Lichtwellenleiter-Anschlußkabels mit einem Lichtwellenleiter-Streckenkabel bereitzustellen, mit dem solche Nachteile vermieden oder zumindest gemildert werden.

Hierfür stellt die Erfindung gemäß Anspruch 1 eine Lichtwellenleiter-Anschlußdose zur Verbindung eines Lichtwellenleiter-Anschlußkabels mit einem Lichtwellenleiter-Streckenkabel, welches Adern aufweist, die einen Mindest-Biegeradius haben, bereit, wobei die Lichtwellenleiter-Anschlußdose wenigstens einen Steckverbinder für das Anschlußkabel und wenigstens einen für das Streckenkabel aufweist, wobei die Steckverbinder an der Anschlußeinheit angeordnet sind und durch wenigstens einen im Inneren der Anschlußeinheit gelegenen Verbindungs-Lichtwellenleiter miteinander verbunden sind, dadurch gekennzeichnet, daß der Verbindungs-Lichtwellenleiter mit einem kleineren Biegeradius als dem Mindest-Biegeradius der Adern des Streckenkabels geführt ist, wobei der kleinere Biegeradius des Verbindungs-Lichtwellenleiters dadurch erzielt ist, daß beim Verbindungs-Lichtwellenleiter ein anderer Lichtwellenleitertyp als beim Streckenkabel verwendet wird.

Es wird also die Ader des Streckenkabels nicht unmittelbar im Steckverbinder mit der entsprechenden Ader des Anschlußkabels gekoppelt, sondern nur mittelbar über eine zweite Steckverbindung und einen dazwischengeschalteten Verbindungs-Lichtwellenleiter.

Die Erfindung hat den Vorteil, daß die Installation einer Anschlußstelle wesentlich vereinfacht ist. Die vor Ort erforderlichen Arbeiten sind geringer und einfacher, so daß beim Installationspersonal eine geringere Qualifikation ausreichend ist. Die Fehlerhäufigkeit bei der Installation wird verringert. Auch Wartung und Reparaturen können schneller und mit geringerem Aufwand durchgeführt werden. Die Erfindung verringert damit die Installationskosten und erhöht damit insgesamt die Verfügbarkeit und Zuverlässigkeit von LWL-basierten Datenkommunikations-Netzwerken.

Die eingangs genannte DE 41 20 038 C2 ist fernliegend, da sie keine Anschlußdose betrifft. Dazu kommt, daß bei der vorliegenden Erfindung nicht etwa die Anschlußdose mit einem austauschbaren Einsatz- oder Zwischenstück ausgerüstet ist. Vielmehr stellt die Anschlußdose gewissermaßen selbst das austauschbare Stück dar. Diesem Gedanken liegt der genannte Stand der Technik fern.

Die Unteransprüche betreffen vorteilhafte Ausgestaltungen.

Grundsätzlich ist es möglich, die Anschlußdose mit einem Gehäuse nach Art eines teilweise offenen Rahmens auszubilden, um einen einfachen Zugang in das Innere zu ermöglichen. Zwecks Fehlervermeidung ist die Anschlußdose jedoch vorteilhaft allseitig im wesentlichen geschlossen (Anspruch 2). Dies verhindert unsachgemäße Eingriffe durch das Montagepersonal und das unerwünschte Eindringen irgendwelcher Teile in die Anschlußeinheit.

Grundsätzlich ist die Anschlußdose zum stationären Einbau geeignet, z.B. in alle Arten von Kanälen, Schächten, Trassen, Schienen etc., in denen LWL-Kabel geführt werden. Bevorzugt ist die Anschlußdose jedoch für die - eingangs bereits erwähnten - Brüstungskanäle ausgebildet, die i.a. die Kabel für die Arbeitsplatzerschließung aufnehmen (Anspruch 3). Derartige Brüstungskanäle weisen i.a. Einbaubecher auf, in welche die Anschlußeinheit eingebaut werden kann.

Eine Schwierigkeit der bei den herkömmlichen Anschlußdosen angewendeten Technik besteht darin, daß sich der Mindest-Biegeradius oft nicht realisieren läßt. Zudem ist die Faserführung durch die Art und Weise der Einführung des im Kanal fixierten LWL-Kabels in den Gerätebecher und durch die nachträgliche Montage der LWL-Dose nicht festgelegt, was oft Biegungen mit Radius unterhalb des Mindest-Biegeradius nach sich zieht.

Gemäß Anspruch 4 sind die Steckverbinder von Anschlußkabel und Streckenkabel in einem Winkel zueinander angeordnet; der zur Verbindung jeweils zweier zusammengehörender Steckverbinder dienende Verbindungs-Lichtwellenleiter verläuft mit entsprechender Biegung in der Anschlußdose. Anordnung und Winkel sind so gewählt, daß die zum Anschluß des Streckenkabels erforderliche Biegung geringer als diejenige ist, die zur direkten Verbindung von Anschluß- und Streckkabel erforderlich wäre, so daß der vom Hersteller vorgegebene Biegeradius am Streckenkabel mit Sicherheit nicht unterschritten wird. Besonders vorteilhaft sind Anordnung und Winkel so gewählt, daß die Verbindung von Anschluß- und Streckenkabel ohne wesentliche Biegung des Streckenkabels erfolgen kann.

Letzteres ist besonders vorteilhaft, da es eine im wesentlichen geradlinige Führung der Streckenkabel im Brüstungskanal ermöglicht. Eine dauerhafte Zugentlastung ist mit den üblicherweise vom Kanalhersteller bereitgestellten Zugentlastungsmitteln im Brüstungskanal einfach realisierbar. Die Maßnahme erlaubt eine wohl definierte Führung des Streckenkabels. Auch ist die Installation einer Anschlußstelle wesentlich vereinfacht, indem - bei einem vorkonfektionierten Streckenkabel - nur ein Anstecken des Streckenkabels an die vorgefertigte Anschlußdose und deren Einsetzen in einen vorhandenen Einbaubecher des Brüstungskanals erforderlich ist (bei nicht-vorkonfektioniertem Streckenkabel muß zusätzlich ein Stecker montiert werden). Im übrigen hat die Ausgestaltung als in sich geschlossenes System mit in Streckenkabelrichtung gerichtetem Streckenkabel-Steckverbinder den Vorteil, daß die Anschlußdose in die verschieden gestalteten Einbaubecher der diversen Brüstungskanaltypen eingebaut werden kann, ohne daß es hier zu einer besonderen Anpassung an den jeweiligen Typ bedarf. Es ist also möglich, die Anschlußdose einheitlich für die Vielzahl der verschiedenen Brüstungskanaltypen auszubilden.

Wie bei Lichtwellenleiter-Steckdosen üblich, ist der Steckverbinder für das Anschlußkabel nach vorne gerichtet, wobei er eine Neigung nach oben oder unten haben kann. Vorteilhaft ist der Steckverbinder für das Strekkenkabel zur Seite oder nach oben oder unten gerichtet, je nachdem, aus welcher Richtung das Streckenkabel zur Anschlußdose führt (Anspruch 5).

Um eine etwaige Verschlechterung des Dämpfungsverhaltens durch räumliche Verschiebung des Verbindungs-Lichtwellenleiters, etwa bei oder nach der Installation zu verhindern, ist dieser vorzugsweise im Inneren der Anschlußdose durchgängig festgelegt und damit gegen Verschiebungen gesichert (Anspruch 6).

Um die Anschlußdose besonders klein dimensionieren zu können, ist der Verbindungs-Lichtwellenleiter mit einem kleineren Biegeradius als dem vorgeschriebenen Mindest-Biegeradius der Streckenkabel-Fasern geführt. Für das relativ kurze Stück des Verbindungs-Lichtwellenleiters wird ein anderer Lichtleitertyp als beim Streckenkabel verwendet, welcher einen kleineren Mindest-Biegeradius als dieser hat. Es kann sich z.B. um einen Lichtleiter mit einer speziellen Beschichtung (Coating) handeln, die kleinere Biegeradiien zuläßt.

Die bekannten Steckverbindungssysteme für Anschlußkabel sind genormt; häufig werden hierfür sog. SC-Duplex-Systeme oder ST-Kupplungen verwendet. Derartige Norm-Stecksysteme sind häufig nicht optimal hinsichtlich Dämpfung, Zuverlässigkeit und Raumbedarf. Da für die Steckverbindung zwischen Anschlußeinheit und Streckenkabel kein Zwang zur Verwendung eines Normstecksystems besteht, wird an dieser Stelle vorteilhaft ein anderes System verwendet, welches beispielsweise frei von den genannten Nachteilen des Norm-Stecksystems ist (Anspruch 7). Selbst bei Verwendung ein- und desselben Stecksystems für Anschluß- und Streckenkabel ist es möglich, beide mit einem Stecker bzw. einer Buchse auszustatten, und entsprechend die Anschlußeinheit mit zwei dazu komplementären Buchsen bzw. Steckern. Bei herkömmlichen Stecksystemen ist es hingegen erforderlich an einem der beiden Kabel einen Stecker und am anderen eine Buchse vorzusehen.

Jede Steckverbindung bedingt eine Unterbrechung des Lichtleiters und erhöht daher die Dämpfung der Leitung. Da bei der erfindungsgemäßen Anschlußdose die Steckverbindung zum Streckenkabel im laufenden Betrieb nicht gelöst werden muß, können die Dämpfungsverluste mit Hilfe eines Indexmediums an der Unterbrechungsstelle praktisch vermieden werden (Anspruch 8). Ein solches Indexmedium ist z.B. ein Gel oder eine Flüssigkeit, deren Brechungsindex hier dem der zu verbindenden Lichtleiter entspricht. Bei herkömmlichen Dosen mit häufig gesteckten Steckverbindungen ist die Verwendung eines derartigen Indexmediums mit Nachteilen behaftet, da es aufgrund von Verschmutzung zu einem Blindwerden kommen kann. Diese Gefahr ist bei der Erfindung nicht gegeben, da die Steckverbindung - wie gesagt - praktisch nur einmal zusammengesteckt wird und dann in zusammengestecktem Zustand verbleibt.

Die mögliche kleine Dimensionierung der Anschlußdose erlaubt es schließlich, diese kaskadierbar auszubilden und damit Multifunktions-Anschlußeinheiten zu schaffen (Anspruch 9. Die Kaskadierung kann sich auf eine rein mechanische Verbindung (z.B. eine Rast- oder Steckverbindung) der einzelnen Einheiten beschränken, kann aber auch ein Durchschleifen eines oder mehrerer Lichtwellenleiter mit Hilfe von Lichtwellenleiter-Steckverbindungen umfassen. Es sei klargestellt, daß im Rahmen kaskadierbarer Anschlußdosen auch eine Ausgestaltung unter den Anspruch 1 fällt, bei der die hintere Steckverbindung nicht zum unmittelbaren Anschluß an das Streckenkabel bestimmt ist, sondern nur zum mittelbaren Anschluß über eine andere, vorgeordnete Anschlußdose.

Die Erfindung wird nun anhand von Ausführungsbeispielen und der angefügten Zeichnung näher beschrieben.

In der Zeichnung zeigen:
- Fig. 1: eine schematische Ansicht eines geöffneten Brüstungskanals mit installierter Anschlußdose von vorne;
- Fig. 2: eine schematische Querschnittansicht der Anschlußdose von Fig. 1 von oben;
- Fig. 3: eine schematische Perspektivansicht der Anschlußdose von Fig. 2;
- Fig. 4: eine schematische Querschnittansicht einer Steckverbindung zum Streckenkabel;
- Fig. 5: eine schematische Vorderansicht zweier zusammengesteckter Anschlußdosen.

Funktionsgleiche oder -ähnliche Teile sind mit gleichen Bezugszeichen gekennzeichnet.

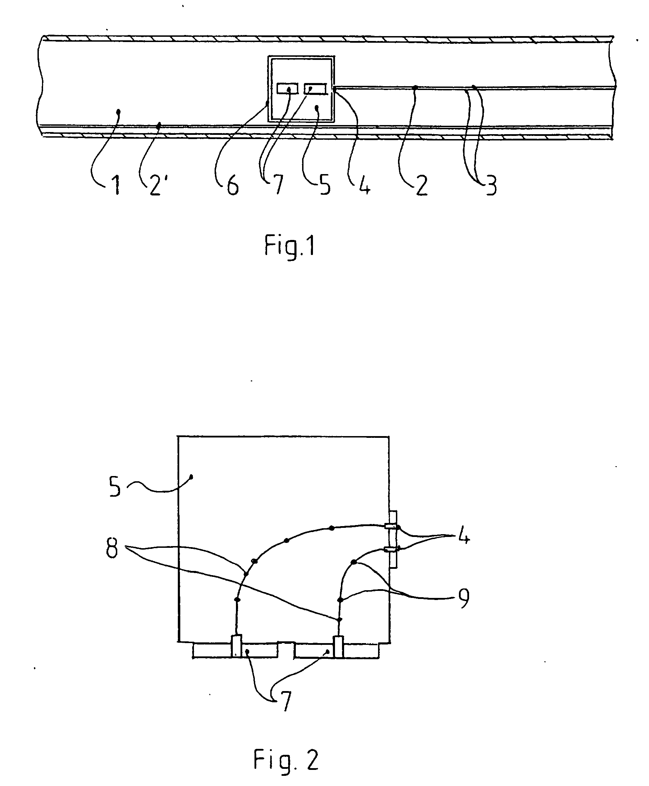

In dem waagerechten Brüstungskanal 1 gemäß Fig. 1 verlaufen mehrere LWL-Kabel 2, 2' mit jeweils zwei LWL-Adern 3 aufweisen. Es versteht sich, daß LWL-Kabel eine wesentlich größere Anzahl von Adern haben können (z.B. bis zu 144 Adern). Die gezeigte Ausgestaltung zeigt deshalb nur jeweils zwei Adern, da diese Zahl i.a. für einen Kommunikationskanal erforderlich ist, nämlich je eine Ader für die Aufwärts- und die Abwärtsverbindung. Die Adern 3 eines der LWL-Kabel 2 sind über jeweils einen Steckverbinder 4 mit einer Anschlußdose 5 gekoppelt, welche in einen sog. Gerätebecher 6 des Brüstungskanals 1 eingesetzt ist. Die Achse der Steckverbinder 4 verläuft parallel zur Längsachse des Brüstungskanals 1. Die Anschlußeinheit 5 weist außerdem zwei nach vorne gerichtete Steckverbinder 7 (hier Steckbuchsen "SC-Duplex") auf, in die z.B. ein mit komplementären Steckern ausgerüstetes bewegliches Kabel zum Anschluß eines Geräts, beispielsweise eines Arbeitsplatzrechners gesteckt werden kann. Das im Brüstungskanal 1 verlaufende LWL-Kabel 2 dient beispielsweise als Datenübertragungskabel in einem Local-Area-Network (LAN), über das der Arbeitsplatzrechner mit anderen Geräten des Netzwerks kommunizieren kann. Die im Brüstungskanal verlaufenden LWL-Kabel 2,2' werden als "Streckenkabel" bezeichnet, und das von außen einzusteckende, i.a. bewegliche Kabel als "Anschlußkabel".

Man erkennt in Fig. 1, daß das Streckenkabel 2 aufgrund der Ausrichtung des Streckenkabel-Steckverbinders 4 parallel zur Längsachse des Brüstungskanals 1 ohne wesentliche Biegung an die Anschlußdose 5 angeschlossen ist.

Fig. 2 veranschaulicht das Innere der Anschlußdose 5. Die Streckenkabel-Steckverbinder 4 und die Anschlußkabel-Steckverbinder 7 liegen im wesentlichen in einer Ebene in einem Winkel von 90° zueinander. Sie sind durch je einen entsprechend gebogenen Verbindungs-Lichtwellenleiter 8 miteinander verbunden. Bei anderen (nicht gezeigten) Ausführungsformen können die Achsen der Steckverbinder 4,7 windschief zueinander liegen. Die Gesamt-Biegeamplitude des Verbindungs-Lichtwellenleiters 8 kann vorzugsweise zwischen 30° und 150° betragen. Um diesen in einer fixierten Lage zu halten und eine gleichmäßige Krümmung dauerhaft sicherzustellen, ist er über seine ganze Länge festgelegt, was in Fig. 2 durch mehrere Fixierungspunkte 9 veranschaulicht ist. Bei anderen (nicht gezeigten) Ausführungsformen erfolgt die Fixierung kontinuierlich, etwa durch Klebung. Die Fixierung der Verbindungs-Lichtwellenleiter 8 in der Anschlußdose 5 erlaubt es, den Mindestbiegeradius zu unterschreiten, der für die Adern 3 des Streckenkabels vorgegeben ist. Beispielsweise kann man bei einem Mindestbiegeradius von 3cm einen Biegeradius von nur 2cm ohne größere Dämpfungsverluste realisieren. Bei anderen (nicht gezeigten) Ausführungsformen werden zum Erzielen kleinerer Biegeradiien Lichtleiter verwendet, die speziell beschichtet sind oder in ein geeignetes Indexmedium eingelegt sind. Die Anschlußdose 5 ist entsprechend klein dimensioniert, was vorteilhaft im Sinne einer Miniaturisierung ist und eine Kaskadierung erlaubt (Fig. 5).

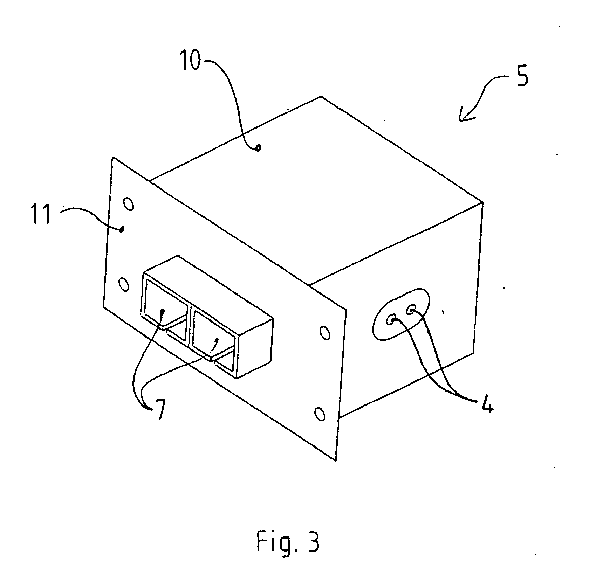

Die perspektivische Ansicht gemäß Fig. 3 veranschaulicht, daß das Gehäuse 10 der Anschlußdose 5 allseitig geschlossen ist. Eine Deckplatte 11 bildet die im installierten Zustand sichtbare Außenseite; sie dient mit ihrem Überstand auch der Befestigung am Außenrand des Gerätebechers 6. Aufgrund ihrer Abgeschlossenheit und kleinen Dimensionierung ist die Anschlußdose 5 ohne weitere Anpassung für die verschiedensten Brüstungskanal-Typen universell verwendbar, soweit nur ihre Befestigung an den unterschiedlich gestalteten Gerätebechern der verschiedenen Typen möglich ist.

Fig. 3 veranschaulicht auch, daß die Steckverbinder 4 und 7 zu unterschiedlichen Steckverbindungssystemen gehören. Bei den Anschlußkabel-Steckverbindern 7 handelt es sich i.a. um einen genormten Doppel-Steckverbinder zum Anschluß von Geräten (z.B. SC-Duplex), während die Strekkenkabel-Steckverbinder 4 normfrei sind. Sie sind beispielsweise ein Duplexverbinder, der gegenüber den Normverbindern 7 miniaturisiert ist und auf geringe Verluste optimiert ist, z.B. durch Verwendung eines Indexmediums, aber nicht für häufiges Stecken ausgelegt zu sein braucht.

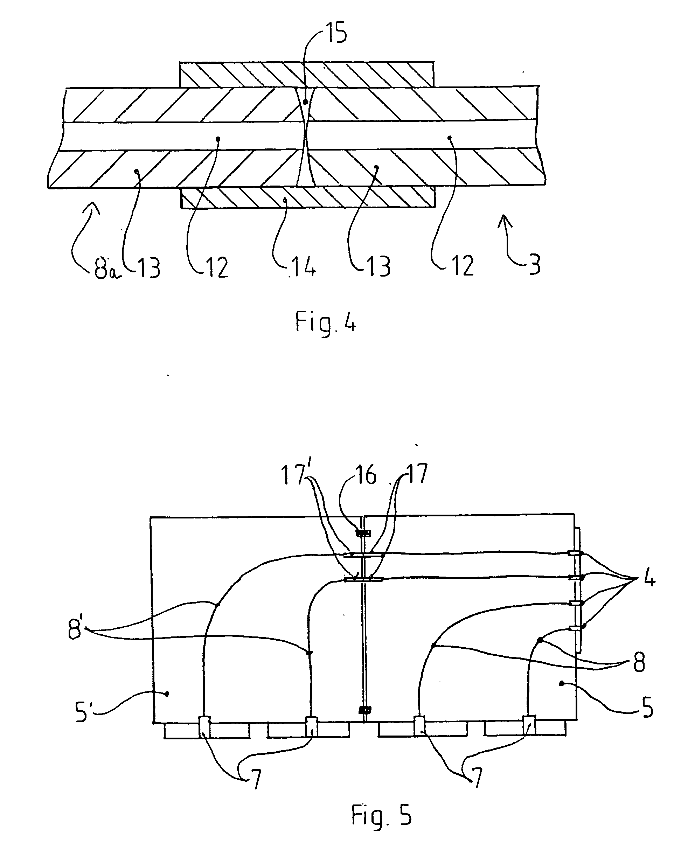

Fig. 4 veranschaulicht, wie eine Ader 3 des Streckenkabels 4 mit der Ader 8a der Verbindungs-Lichtwellenleiter 8 im Bereich des Steckverbinders 4 gekoppelt sind. Jede der (nicht maßstabsgetreu dargestellten) Adern 3, 8a weist zentral eine Glasfaser 12 und eine um diese außen herum angeordnete Beschichtung 13 auf. Die sich berührenden Stirnseiten der Adern 3, 8a sind im rechten Winkel zur Aderachse konkav geschliffen. Dies stellt sicher, daß der Spalt zwischen den beiden Adern 3, 8a im Bereich der Glasfaser 12 möglichst eng ist. Eine Zentrierhülse 14 (ein Röhrchen, beispielsweise aus Keramik oder Metall) überdeckt muffenartig die Endbereiche der Adern 3, 8a und fixiert sie in konzentrischer Relativlage im Steckverbinder 4. Der Spalt zwischen den Enden der Adern 3, 8a ist mit einem Indexmedium 15 (z.B. einem "Matching-Gel") ausgefüllt, welches annähernd den gleichen Brechungsindex wie der Kern der Glasfasern 12 aufweist und dadurch eine praktisch dämpfungsfreie optische Verbindung zwischen diesen schafft.

Bei den Glasfasern kann es sich um Mono- oder Multimodefasern mit Stufen- oder Gradientenprofil handeln. Statt des konkaven Schliffs ist auch ein ebener Schliff möglich.

Fig. 5 zeigt schließlich ein Beispiel eines kaskadierten Systems mit zwei Anschlußdosen 5,5'. Diese sind mit Hilfe von Steckkupplungen 16 mechanisch miteinander Seite an Seite gekoppelt. Das Streckenkabel 2 weist hier vier Adern auf. Entsprechend ist der Streckenkabel-Steckverbinder 4 hier ein Vierfach-Verbinder. Zwei Adern des Streckenkabels 4 sind innerhalb der ersten Anschlußdose 5 mit einem Paar Verbindungs-Lichtwellenleitern 8 zu den Anschlußkabel-Steckverbindern 7 geführt, entsprechend den oben geschilderten Ausführungsformen. Ein zweites Paar von Verbindungslichtwellenleitern 8' ist durch die Anschlußdose 5 geführt und endet in der dem Vierfach-Steckverbinder 4 gegenüberliegenden Seite in Steckverbindern 17 (in Form eines Zweifachsteckverbinders) zur Nachbareinheit 5'. Diese weist an entsprechender Stelle komplementäre Steckverbinder 17' auf. Diese Nachbarsteckverbinder 17, 17' sind so ausgebildet, daß beim Zusammenstecken der beiden Anschlußdosen 5, 5' eine optische Kopplung erzielt wird. Von den komplementären Nachbarsteckverbindern 17' führt wiederum ein Paar Verbindungs-Lichtwellenleiter 8 zu den Anschlußkabel-Steckverbindern 7 der Anschlußdose 5', wie bei den oben beschriebenen Ausführungsformen. Die Nachbarsteckverbinder 17, 17' sind für die "Gehäusezusammensteckung" besonders ausgelegte, normfreie Steckverbinder.

Insgesamt leistet die Erfindung durch die Erhöhung der Zuverlässigkeit und der Verringerung des Installations- und Wartungsaufwands von Geräteanschlüssen einen wichtigen Beitrag zur breiteren Durchsetzung von Lichtwellenleitern in der Datenkommunikation.

## Patentansprüche

1. Lichtwellenleiter-Anschlußdose zur Verbindung eines Lichtwellenleiter-Anschlußkabels mit einem Lichtwellenleiter-Streckenkabel (2), welches Adern aufweist, die einen Mindest-Biegeradius haben, wobei die Lichtwellenleiter-Anschlußdose wenigstens einen Steckverbinder (7) für das Anschlußkabel und wenigstens einen (4, 17') für das Streckenkabel (2) aufweist, wobei die Steckverbinder (4, 7) an der Anschlußdose (5, 5') angeordnet sind und durch wenigstens einen im Inneren der Anschlußdose (5, 5') gelegenen Verbindungs-Lichtwellenleiter (8, 8') miteinander verbunden sind **dadurch gekennzeichnet, daß** der Verbindungs-Lichtwellenleiter (8, 8') mit einem kleineren Biegeradius als dem vorgeschriebenen Mindest-Biegeradius der Adern (3) des Streckenkabels (2) geführt ist, wobei der kleinere Biegeradius des Verbindungs-Lichtwellenleiters (8, 8') dadurch erzielt ist, daß beim Verbindungs-Lichtwellenleiter (8, 8') ein anderer Lichtwellenleitertyp als beim Streckenkabel (2) verwendet wird.

2. Lichtwellenleiter-Anschlußdose nach Anspruch 1, welche die Form einer geschlossenen Dose aufweist.

3. Lichtwellenleiter-Anschlußdose nach Anspruch 1 oder 2, welche für den Einsatz in Brüstungskanälen (1) ausgebildet ist.

4. Lichtwellenleiter-Anschlußdose nach einem der Ansprüche 1-3, bei welcher die Steckverbinder (4, 7, 17') von Anschlußkabel und Streckenkabel (2) in einem Winkel zueinander an der Anschlußdose (5, 5') angeordnet sind und der wenigstens eine, in der Anschlußdose gelegene Verbindungs-Lichtwellenleiter (8, 8') gekrümmt verläuft.

5. Lichtwellenleiter-Anschlußdose nach Anspruch 6, bei welcher der wenigstens eine Steckverbinder (7) für das Anschlußkabel nach vorne, gegebenenfalls auch mit Neigung nach oben oder unten, gerichtet ist, während der wenigstens eine Steckverbinder (4, 17') für das Streckenkabel (2) zur Seite oder nach oben oder unten gerichtet ist.

6. Lichtwellenleiter-Anschlußdose nach einem der Ansprüche 1-5, in welcher der Verbindungs-Lichtwellenleiter (8, 8') im Inneren der Anschlußdose (5, 5') festgelegt ist.

7. Lichtwellenleiter-Anschlußdose nach einem der Ansprüche 1-6, bei welchem der/die Steckverbinder (7) für das Anschlußkabel und derjenige/diejenige (4, 17') für das Streckenkabel (2) verschiedene Stecksystem-Typen sind.

8. Lichtwellenleiter-Anschlußdose nach einem der Ansprüche 1-7, bei welchem der Steckverbinder (4, 17') für das Streckenkabel (2) so eingerichtet ist, daß in mit dem Streckenkabel (2) zusammengesteckten Zustand optische Verluste mit Hilfe eines Indexmediums (15) verringert werden können.

9. Lichtwellenleiter-Anschlußdose nach einem der Ansprüche 1-8, welche kaskadierbar ausgebildet ist, also mit einer oder mehreren anderen Anschlußdosen (5, 5') der gleichen Art aneinandergereiht kann, wobei sich die Kaskadierung auf ein Aneinanderreihen im mechanischen Sinn beschränken kann, oder zusätzlich ein Durchschleifen eines oder mehrerer Verbindungs-Lichtwellenleiter (8') zu einer benachbarten Anschlußdose (5, 5') umfassen kann.

## Claims

1. An optical fibre connection box for connecting an optical fibre connection cable to an optical fibre wall duct cable (2), which comprises wires having a minimum bending radius, the optical fibre connection box comprising at least one plug connector (7) for the connection cable and at least one plug connector (4, 17') for wall duct cable (2), the plug connectors (4, 7) being disposed at the connection box (5, 5') and being connected to one another by at least one connection optical fibre (8, 8') laid in the interior of the connection box (5, 5'),
**characterised in that** the connection optical fibre (8, 8') is routed with a smaller bending radius than the prescribed minimum bending radius of the wires (3) of the wall duct cable (2), the smaller bending radius of the connection optical fibre (8, 8') being achieved by the fact that a different type of optical fibre is used for the connection optical fibre (8, 8') than for the wall duct cable (2).

2. An optical fibre connection box according to Claim 1, which takes the form of a closed box.

3. An optical fibre connection box according to Claim 1 or 2, which is designed for use in perimeter trunking (1).

4. An optical fibre connection box according to one of Claims 1 to 3, in which the plug connectors (4, 7, 17') of connection cables and wall duct cables (2) are disposed at an angle to each other at the connection box (5, 5'), and the at least one connection optical fibre (8, 8') laid in the connection box runs in a curve.

5. An optical fibre connection box according to Claim 6, in which the at least one plug connector (7) for the connection cable is directed forwards, where appropriate is also inclined upwards or downwards, whereas the at least one plug connector (4, 17') for the wall duct cable (2) is directed sideways or upwards or downwards.

6. An optical fibre connection box according to one of Claims 1 to 5, in which the connection optical fibre (8, 8') is fixed in the interior of the connection box (5, 5').

7. An optical fibre connection box according to one of Claims 1 to 6, in which the plug connector/connectors (7) for the connection cable and the plug connector/connectors (4, 17') for the wall duct cable (2) are different types of plug system.

8. An optical fibre connection box according to one of Claims 1 to 7, in which the plug connector (4, 17') for the wall duct cable (2) is adapted so that in the state plugged together with the wall duct cable (2) optical losses can be reduced by means of an index medium (15).

9. An optical fibre connection box according to one of Claims 1 to 8, which has a cascade design, i.e. can be connected in series with one or more other connection boxes (5, 5') of the same type, it being possible to limit the cascading to a series connection in the mechanical sense, or additionally may comprise a feeding-through of one or more connection optical fibres (8') to an adjacent connection box (5, 5').

## Revendications

1. Boîte de raccordement à guide d'onde destinée à la liaison d'un câble de raccordement à un câble de ligne (2) comportant des conducteurs présentant un rayon de courbure minimum, la boîte de raccordement comportant un connecteur (7) au moins pour le câble de raccordement et connecteur (4, 17') au moins pour le câble de ligne (2), les connecteurs (4, 7) étant disposés sur la boîte de raccordement (5, 5') et reliés entre eux par un guide d'onde de raccordement (8, 8') au moins disposé à l'intérieur de ladite boîte de raccordement (5, 5'), **caractérisé en ce que** le guide d'onde de raccordement (8, 8') présente un rayon de courbure plus petit que le rayon de courbure minimum prescrit des conducteurs (3) du câble de ligne (2), le rayon de courbure plus petit du guide d'onde de raccordement (8, 8') étant obtenu **en ce que** pour ledit guide d'onde de raccordement (8, 8') on utilise un autre type de guide d'onde que celui qui est utilisé pour le câble de ligne (2).

2. Boîte de raccordement à guide d'onde selon la revendication 1 présentant la forme d'une boîte fermée.

3. Boîte de raccordement à guide d'onde selon la revendication 1 ou 2 configurée pour la mise en oeuvre dans des canaux de balustrade (1).

4. Boîte de raccordement à guide d'onde selon l'une quelconque des revendications 1 à 3 où les connecteurs (4, 7, 17') du câble de raccordement et du câble de ligne (2) sont disposés sur la boîte de raccordement (5, 5') en formant un angle et où le guide d'onde de raccordement (8, 8') au moins installé dans la boîte de raccordement présente une courbure.

5. Boîte de raccordement à guide d'onde selon la revendication 6 où le guide d'onde de raccordement (7) au moins pour le câble de raccordement vers l'avant est aussi dirigé le cas échéant avec une inclinaison vers le haut ou vers le bas, alors que le connecteur (4, 17') au moins pour le câble de ligne (2) est dirigé vers le côté ou vers le haut ou vers le bas.

6. Boîte de raccordement à guide d'onde selon l'une quelconque des revendications 1 à 5 dans laquelle le guide d'onde de raccordement (8, 8') est fixé à l'intérieur de ladite boîte de raccordement (5, 5').

7. Boîte de raccordement à guide d'onde selon l'une quelconque des revendications 1 à 6 où le / les connecteur(s) (7) pour le câble de raccordement et le / les connecteur(s) (4, 17') pour le câble de ligne (2) représentent différents types de système connectique.

8. Boîte de raccordement à guide d'onde selon l'une quelconque des revendications 1 à 7 où le connecteur (4, 17') pour le câble de ligne (2) est configuré de telle sorte qu'à l'état connecté avec le câble de ligne (2), les pertes optiques peuvent être réduites à l'aide d'un média d'indice (15).

9. Boîte de raccordement à guide d'onde selon l'une quelconque des revendications 1 à 8 configurée pour être cascadée, c'est-à-dire qu'elle peut être installée en série avec une ou plusieurs autres boîtes de raccordement (5, 5') du même type, le montage en cascade pouvant se limiter à un montage en série au sens mécanique ou comprendre en plus un bouclage d'un ou de plusieurs guides d'onde de raccordement (8') à une boîte de raccordement (5, 5') voisine.
